# FASCICULE DE BREVET EUROPEEN

(11) **EP 1 849 136 B1**
(45) Date de publication et mention de la délivrance du brevet: **19.11.2008**
(21) Numéro de dépôt: 06709321.1
(22) Date de dépôt: 15.02.2006
(51) Int. Cl.: G06T 7/00

(54) **PROCEDE DE DETECTION DE DEFAUTS DE MONTAGE D'UN COMPOSANT SUR UNE CARTE ELECTRONIQUE.**
VERFAHREN ZUR ERFASSUNG VON MÄNGELN BEI DER MONTAGE EINES BAUTEILS AUF EINER ELEKTRONIKKARTE
METHOD FOR DETECTING DEFECTS IN THE MOUNTING OF A COMPONENT ON AN ELECTRONIC CARD

(30) Priorité: 17.02.2005 FR 0501643
(43) Date de publication de la demande: 31.10.2007
(73) Titulaire: VIT, 06370 Mouans Sartoux (FR)
(72) Inventeur: STABILE, Marc, F-38760 Varces Alliares et Risset (FR); BOUCHEZ, Laetitia, F-38600 Fontaine (FR)
(74) Mandataire: Fruchard, Guy
(86) Numéro de dépôt international: PCT/FR2006/000344
(87) Numéro de publication internationale: WO 2006/100359

(56) Documents cités:
- US-A- 5 064 291
- US-A- 5 184 190
- US-A- 6 067 153
- US-A1- 2002 057 839
- US-A1- 2003 108 235
- US-B1- 6 539 331
- PADMANABHAN K, ANANTHI S.: "A Practical Approach to DIGITAL SIGNAL PROCESSING" 2001, NEW AGE INTERNATIONAL (P) LIMITED, PUBLISHERS , NEW DEHLI , XP002388166 page 231 - page 232

## Description

La présente invention concerne un procédé de détection de défauts de montage d'un composant sur une carte électronique.

### ARRIERE PLAN DE L'INVENTION

On sait que les défauts de fonctionnement d'une carte électronique proviennent principalement soit d'une défaillance d'un des composants, soit d'un défaut de montage d'un composant lors de la réalisation de la carte électronique, en particulier d'un défaut de soudage d'un composant, notamment un défaut de soudage d'une patte de liaison d'un composant électronique à une piste conductrice d'un circuit imprimé.

Pour détecter les défauts lors du montage d'un composant, on connaît des procédés comportant les étapes d'effectuer un éclairement du composant et de visualiser au moins une partie à contrôler du composant à l'aide d'un capteur donnant une image numérique par points sous forme d'une matrice de niveaux de luminosité des points. La matrice de niveaux de luminosité ainsi obtenue est ensuite traitée par un algorithme afin de déterminer les parties à contrôler qui ne sont pas montées de façon satisfaisante par comparaison avec une partie de composant correspondante montée de façon satisfaisante. Les algorithmes de comparaison utilisés à ce jour effectuent généralement une moyenne sur l'ensemble de la fenêtre d'analyse. Ces algorithmes de traitements conduisent à une comparaison trop globale qui ne permet pas d'effectuer une détection correcte des défauts existants.

On connaît en outre, notamment du document US 6,539,331, un procédé d'inspection comportant les étapes d'établir selon une direction prédéterminée d'au moins une partie de composant un profil de référence obtenu en affectant des valeurs de référence à des points successifs selon la direction prédéterminée, d'établir pour chaque partie à contrôler un profil de mesure obtenu en affectant à des points successifs selon la direction prédéterminée des valeurs de mesure déterminées de façon correspondante aux valeurs de référence du profil de référence, d'effectuer une comparaison entre le profil de mesure et le profil de référence en fonction d'une caractéristique en relation avec le profil de référence et d'effectuer un bilan des défauts en fonction de cette comparaison.

Dans ce document, le profil de référence est un profil simulé établi à partir de dimensions connues, c'est-à-dire à partir d'un composant monté sans défaut. Un profil d'erreur est ensuite établi à partir d'une différence entre un profil test et le profil de référence. Pour tenir compte de variations possibles des valeurs de mesure à égalité de dimensions lors de l'inspection d'une partie de composant, un procédé d'itération est mis en oeuvre de sorte que le traitement global est complexe.

### OBJET DE L'INVENTION

Le but de l'invention est de proposer un procédé de détection des défauts pouvant être facilement mis en oeuvre et conduisant néanmoins à une détection satisfaisante des défauts.

### RESUME DE L'INVENTION

Selon l'invention on prévoit un procédé de détection de défauts de montage d'un composant sur une carte électronique, le procédé comportant les étapes d'effectuer un éclairement du composant et de visualiser au moins une partie à contrôler du composant à l'aide d'un capteur donnant une image numérique par points sous forme d'une matrice de niveaux de luminosité des points, d'établir selon une direction prédéterminée d'au moins une partie de composant un profil de référence obtenu en affectant des valeurs de référence à des points successifs selon la direction prédéterminée, d'établir pour chaque partie à contrôler un profil de mesure obtenu en affectant à des points successifs selon la direction prédéterminée des valeurs de mesure déterminées de façon correspondante aux valeurs de référence du profil de référence, d'effectuer une comparaison entre le profil de mesure et le profil de référence en fonction d'une caractéristique en relation avec le profil de référence et d'effectuer un bilan des défauts en fonction de cette comparaison, les valeurs de référence étant calculées en faisant une moyenne des valeurs de mesure pour une série de parties à contrôler.

Ainsi, le profil de référence prend directement en compte les variations de mesure entre les différentes parties de composant à contrôler de sorte que la comparaison peut être réalisée avec un algorithme simple.

Selon un aspect avantageux de l'invention, les valeurs de mesure sont calculées en faisant une moyenne des niveaux de luminosité relevés selon une direction perpendiculaire à la direction prédéterminée. On minimise ainsi les effets de variations ponctuelles des niveaux de luminosité sans relation directe avec la qualité du montage.

Selon un autre aspect avantageux de l'invention, les valeurs de mesure sont évaluées sous forme de gradients. On élimine ainsi l'incidence de variations globales de l'éclairement au cours de la mise en oeuvre du procédé de détection.

### BREVE DESCRIPTION DES DESSINS

D'autres caractéristiques et avantages de l'invention apparaîtront à la lecture de la description qui suit en référence aux figures ci-jointes parmi lesquelles :
- la figure 1 est la reproduction d'une image numérique partielle d'un composant monté sur une carte électronique,
- la figure 2 est une illustration en perspective schématique d'une patte de composant lors d'une étape initiale du procédé selon l'invention,
- la figure 3 est une matrice des niveaux de luminosité obtenus à partir de la patte de la figure 2,
- la figure 4 illustre un premier mode d'établissement d'un profil utilisé dans la mise en oeuvre du procédé selon l'invention,
- la figure 5 illustre un second mode d'établissement d'un profil utilisé dans la mise en oeuvre du procédé selon l'invention,
- la figure 6 est une visualisation graphique du procédé selon l'invention lors de sa mise en oeuvre sur les pattes du composant de la figure 1.

### DESCRIPTION DETAILLEE DE L'INVENTION

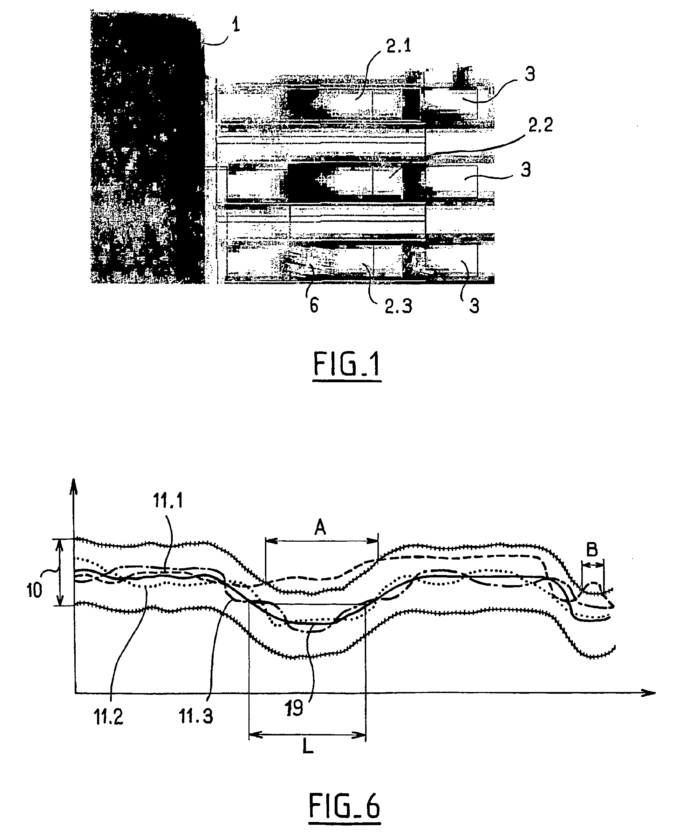

En référence à la figure 1, celle-ci illustre sous forme d'une image numérique une partie d'un composant 1 ainsi que trois pattes 2.1, 2.2 et 2.3 montées pour relier le composant 1 à des plages 3 d'une carte électronique. Sur cette image les pattes 2.1 et 2.2 sont montées de façon satisfaisante tandis que la patte 2.3 est relevée, c'est-à-dire qu'elle n'est pas en contact avec la plage 3 correspondante.

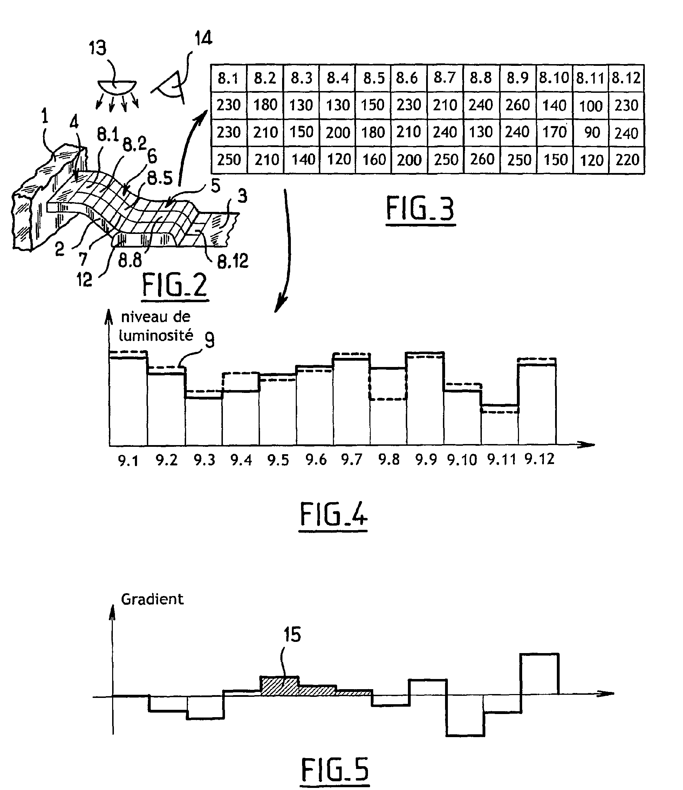

La figure 2 est une vue en perspective schématique d'une patte 2 et de la plage conductrice 3 à laquelle elle est associée. La figure 3 est une matrice illustrant les niveaux de luminosité relevés dans une fenêtre d'analyse dont les points sont symbolisés par un quadrillage 7 sur la vue en perspective de la figure 2. La figure 4 est un graphe visualisant un premier mode d'établissement d'un profil utilisé pour la mise en oeuvre du procédé selon l'invention.

De façon connue en soi les niveaux de luminosité des points de la matrice sont obtenus en effectuant un éclairement du composant au moyen d'une lampe 13 et une visualisation au moyen d'un capteur 14 donnant une image numérique par points.

Ainsi que cela est visible sur la vue en perspective de la figure 2, la patte 2 comprend une portion horizontale 4 qui est raccordée au composant 1, une portion horizontale 5 qui est soudée à la plage conductrice 3, et une portion de liaison inclinée 6.

Sur la figure 1 les portions horizontales 4 et 5 apparaissent presque totalement blanches et sont bordées par des carrés gris de différentes nuances correspondant à des niveaux de luminosité des points lorsque les pattes sont soumises à un éclairement. Les portions de liaison 6 apparaissent en noir en raison de leur inclinaison qui dévie la lumière, sauf en ce qui concerne la patte 2.3 qui est relevée et dont la portion de liaison 6 est donc moins inclinée de sorte qu'elle apparaît claire sur l'image.

Chaque point définissant l'image numérique apparaît sur la figure 1 sous forme d'un petit carré très fortement agrandi, la dimension réelle d'un point étant par exemple de l'ordre de 25 µm.

Sur la vue en perspective de la figure 2, les points définissant l'image numérique ont été représentés de façon simplifiée encore plus grands que sur l'image de la figure 1 sous forme d'un quadrillage 7 définissant trois lignes comprenant chacune douze points accolés selon la direction longitudinale de la patte, et douze rangées comprenant chacune trois points accolés selon une direction transversale perpendiculaire à la direction longitudinale. Pour une meilleure identification, les rangées portant la référence générale 8 ont été identifiées avec les références particulières 8.1, 8.2... 8.5... 8.8...8.12.

De façon connue en soi, les niveaux de luminosité de chacun des points définissant la fenêtre d'analyse sont relevés et servent à établir une matrice comme illustré à la figure 3.

Selon un premier mode d'établissement d'un profil de mesure, le profil de mesure est établi de façon connue en soi selon une direction longitudinale d'une patte, ici la patte 2.1, en affectant à des points successifs selon la direction longitudinale une valeur de mesure calculée à partir d'un point correspondant de la matrice des niveaux de luminosité. Compte tenu de la représentation d'un quadrillage grossier permettant de mieux expliquer l'invention, chaque point 9.1, 9.2..., 9.12 du profil apparaît selon un segment sur le graphe de la figure 4. Selon un premier mode d'établissement particulier illustré selon un trait en tirets sur le graphe de la figure 4, la valeur de mesure affectée à chaque point du profil 9 est égale au niveau de luminosité du point de la ligne centrale de la matrice des niveaux de luminosité. Le point 9.1 a ainsi une valeur de mesure de 250, le point 9.2 une valeur de mesure de 210..., le point 9.8 une valeur de mesure de 130... et le point 9.12 une valeur de mesure de 240. Toutefois, ainsi qu'on peut le constater sur la reproduction de l'image numérique de la figure 1, le niveau de luminosité n'est pas constant pour tous les points d'une même rangée de sorte que la détermination du profil à partir d'une seule ligne de points pourrait conduire à une élaboration imprécise du profil en fonction du cadrage de la fenêtre d'analyse par rapport à la partie de composant à contrôler. Afin d'améliorer l'élaboration du profil de mesure, les valeurs de mesure sont de préférence calculées en faisant une moyenne des niveaux de luminosité relevés selon une direction perpendiculaire à la direction d'établissement du profil de mesure. Dans l'exemple précité, la valeur de mesure de chaque point 9.1, 9.2..., formant le profil de mesure est donc calculée en faisant la moyenne des trois niveaux de luminosité des points de chaque rangée. Le profil obtenu a été représenté sur le graphique de la figure 4 selon un trait continu épais. On constate que pour les rangées 8.4 et 8.8 pour lesquelles le niveau de luminosité du point de la ligne centrale constitue une anomalie par rapport au niveau d'une luminosité des deux autres points de la même rangée, la valeur de mesure obtenue en faisant la moyenne des niveaux de luminosité des points de la rangée est plus représentative de la réflexion correspondant à la géométrie de la rangée correspondante sur la patte 2.1. On remarquera en outre qu'en raison du très faible nombre de points utilisés sur la figure 2 pour illustrer l'invention, le profil de mesure apparaît sous forme de marches d'escalier. En pratique, la dimension d'un point étant très faible, le profil de mesure 9 pourra être visualisé sous forme d'une ligne ondulée comme illustré par la figure 6.

Selon l'invention, on prévoit de calculer un profil de référence 19 en associant à chaque point du profil de référence une valeur de référence calculée en faisant une moyenne des valeurs de mesure pour le point correspondant sur une série des parties à contrôler, c'est-à-dire que la valeur de référence du premier point du profil de référence est égale à la moyenne des valeurs de mesure des premiers points de l'ensemble ou d'une série des parties de composants à contrôler, la valeur de référence du deuxième point du profil de référence est égale à la moyenne des valeurs de mesure du second point des profils de mesure de la même série des parties à contrôler... On notera à ce propos que cette moyenne inclut non seulement les parties à contrôler montées de façon satisfaisante, mais également les parties à contrôler présentant un défaut.

A partir du profil de référence 10, un intervalle de référence 10 est déterminé comme illustré par la figure 6 en fonction de tolérances par rapport au profil de référence, c'est-à-dire en fonction des écarts de profil que pourraient présenter une partie de composant à contrôler par rapport au profil de référence 19 tout en étant montée de façon satisfaisante. Les écarts pris en compte pour établir l'intervalle de référence peuvent être variables selon les points du profil.

On établit ensuite pour chaque partie à contrôler, ici pour chaque patte 2 du composant 1, une comparaison à partir du profil de référence avec le profil de mesure propre à la partie de composant en cours de contrôle. Trois profils de mesure 11 correspondants aux pattes 2.1, 2.2 et 2.3 de la figure 1 ont été illustrés sur la figure 6. Le profil de mesure 11.1 correspondant à la patte 2.1 est en trait mixte, le profil de mesure 11.2 correspondant à la patte 2.2 est en trait pointillé et le profil de mesure 11.3 correspondant à la patte 2.3 est illustré selon des tirets.

Selon un premier exemple de mise en oeuvre du procédé de détection de défauts, une comparaison est effectuée point par point entre chaque point du profil de mesure 11 et les points correspondants de l'intervalle de référence 10 et un bilan des défauts est établi pour chaque partie à contrôler en fonction du nombre de points pour lesquels le profil de mesure 11 est en dehors de l'intervalle de référence 10. Dans l'exemple illustré, le profil de mesure 11.1 en traits mixtes et le profil de mesure 11.2 en pointillés sont entièrement contenus dans l'intervalle de référence et correspondent à des pattes montées de façon satisfaisante, tandis que le profil de mesure en trait selon des tirets comporte deux portions A et B qui sont en dehors de l'intervalle de référence 10, ce qui correspond à une anomalie de montage, en l'espèce une patte soulevée qui n'est donc pas fixée à la plage 3 correspondante. Le procédé selon l'invention permet également de détecter d'autres défauts tels qu'un manque total ou partiel de soudure en particulier par une comparaison du profil de mesure avec l'intervalle de référence dans la zone du joint de soudure 12 (voir figure 2) qui entoure la portion 5 de la patte. Afin de vérifier la présence de soudure sur tous les côtés de la patte, le procédé selon l'invention est de préférence mis en oeuvre une première fois selon une direction longitudinale de la patte en utilisant une fenêtre d'analyse couvrant longitudinalement la patte et une seconde fois en utilisant une fenêtre d'analyse couvrant la patte transversalement, ce qui permet de contrôler l'état du joint de soudure 12 sur les bords latéraux de chaque patte 2.

Le mode de détermination du profil de référence selon l'invention permet de réduire l'intervalle de référence, de sorte que les défauts sont ensuite détectés lors de la comparaison individuelle de chaque profil de mesure avec l'intervalle de référence réduit sans qu'il soit nécessaire d'utiliser un algorithme de comparaison complexe et en minimisant le risque d'accepter des composants dont une partie présente un défaut de montage.

En pratique, la mise en oeuvre du procédé selon l'invention comprend de préférence les étapes de relever toutes les valeurs de mesure des parties à contrôler d'une même série (par exemple toutes les pattes d'un même composant), de mémoriser les valeurs relevées, de calculer le profil de mesure de chaque partie à contrôler et de mémoriser chaque profil de mesure, de calculer le profil de référence en faisant la moyenne des profils de mesure, puis de comparer individuellement chaque profil de mesure au profil de référence.

On comprendra que dans le cas où un nombre important des parties à contrôler sont défaillantes, le profil de référence résultant de la moyenne des valeurs de mesure sera tel que la comparaison entre les profils de mesure individuels et le profil de référence sera faussée et conduira à une acceptation du composant alors que la fixation des pattes est très défaillante.

Pour éviter une telle situation une seconde comparaison est de préférence effectuée, avant ou après la comparaison avec le profil de référence établi selon l'invention. Cette seconde comparaison est effectuée entre chaque profil de mesure et un second profil de référence établi à partir d'au moins une partie de composant sans défaut, en prenant un intervalle de référence élargi qui facilite la comparaison tout en permettant une élimination des composants dont un nombre important des parties à contrôler sont défaillantes.

Par ailleurs on remarquera que le niveau de luminosité de chaque point est fonction non seulement de la géométrie de la partie de composants à contrôler, mais également de l'intensité globale de l'éclairement. Pour éviter des disparités dans le contrôle de différents composants successifs, en particulier pour les parties à faible niveau de luminosité telles que les parties correspondant au joint de soudure 12, il est préférable d'établir le profils de mesure (et donc le profil de référence correspondant) en utilisant des valeurs de mesure qui ne sont pas directement calculées à partir des niveaux de luminosité des points de l'image numérique.

Selon un second mode d'établissement du profil illustré par la figure 5, les valeurs de mesure sont évaluées sous forme de gradients, c'est-à-dire de variations du niveau de luminosité d'un point par rapport à un point immédiatement précédent selon la direction d'élaboration du profil. Dans l'exemple précité de la figure 2, en utilisant la moyenne des niveaux de luminosité par rangée, la valeur de mesure affectée au premier point du profil sera de -40 correspondant à l'écart entre les moyennes des niveaux de luminosité des points 9.1 et 9.2. Au second point du profil sera affectée une valeur de mesure de -60 correspondant à l'écart entre les moyennes des niveaux de luminosité des points 9.2 et 9.3. Au troisième point du profil de mesure sera affectée une valeur de mesure de 10 correspondant à l'écart entre les moyennes des niveaux de luminosité des points 9.3 et 9.4.... Le profil de référence sera ensuite établi comme précédemment en faisant la moyenne des profils de mesure d'une série de parties à contrôler.

La comparaison entre le profil de référence et un profil de mesure établi de la même manière est ensuite effectuée soit point par point soit plus simplement en comparant une différence des valeurs de référence entré le point le plus haut du profil de référence et le point le plus bas du profil de référence, avec la différence des valeurs correspondantes du profil de mesure, ce qui permet une détection locale de défaut en fonction de la fenêtre d'analyse prise en compte.

L'intervalle de référence peut être déterminé de façon manuelle ou de façon automatique en calculant les écarts existants entre plusieurs composants ne présentant pas de défaut et en utilisant comme écart pour déterminer l'intervalle de référence un multiple de l'écart type de la courbe de Gauss obtenue à partir de l'ensemble des profils utilisés pour l'élaboration du profil de référence.

Selon un autre mode de comparaison illustré sur la figure 6, la caractéristique prise en compte n'est pas la valeur affectée à chacun des points du profil de mesure mais la largeur L d'un creux entre deux plateaux ou entre deux pics du profil. Cette largeur peut être calculée au niveau de la portion supérieure du creux, ou à mi-hauteur comme illustré sur la figure 6. On remarquera que pour les profils de mesure 11.1 et 11.2 cette largeur est sensiblement identique à celle du profil de référence 19 tandis que sur le profil de mesure 11.3 le creux est pratiquement inexistant dans la portion A du profil, et est remplacé par une bosse dans la portion B.

Selon encore un autre mode de comparaison illustré à la figure 5, la caractéristique prise en compte est une aire 15 délimitée par une portion du profil, que celui-ci soit établi en gradient comme illustré sur la figure 5, ou en niveaux de luminosité comme illustré sur la figure 4.

Bien entendu, l'invention n'est pas limitée aux modes de mise en oeuvre décrits et on peut y apporter des variantes de réalisation sans sortir du cadre de l'invention tel que défini par les revendications.

En particulier, bien que dans le mode de mise en oeuvre illustré sur la figure 6 les profils de mesure des parties de composants sans défaut soit totalement compris dans l'intervalle de référence, on peut mettre en oeuvre le procédé selon l'invention avec un intervalle de référence réduit de sorte que certaines disparités de parties de composants montés sans défaut se traduisent par des points du profil de mesure en dehors de l'intervalle de référence. Le bilan des défauts est alors établi par référence à un seuil de nombre de points du profil de mesure en dehors de l'intervalle de référence.

Bien que l'invention ait été décrite en effectuant une comparaison point par point entre le profil de mesure et l'intervalle de référence, on peut également effectuer une visualisation du profil de mesure et de l'intervalle de référence et effectuer la comparaison en utilisant des algorithmes de reconnaissance de formes.

## Revendications

1. Procédé de détection de défauts de montage d'un composant sur une carte électronique, le procédé comportant les étapes d'effectuer un éclairement du composant et de visualiser au moins une partie à contrôler (2) du composant à l'aide d'un capteur (14) donnant une image numérique par points sous forme d'une matrice de niveaux de luminosité des points, d'établir selon une direction prédéterminée d'au moins une partie de composant un profil de référence obtenu en affectant des valeurs de référence à des points successifs selon la direction prédéterminée, d'établir pour chaque partie à contrôler un profil de mesure obtenu en affectant à des points successifs selon la direction prédéterminée des valeurs de mesure déterminées de façon correspondante aux valeurs de référence du profil de référence, d'effectuer une comparaison entre le profil de mesure et le profil de référence en fonction d'une caractéristique en relation avec le profil de référence et d'effectuer un bilan des défauts en fonction de cette comparaison, **caractérisé en ce que** les valeurs de référence sont calculées en faisant une moyenne des valeurs de mesure pour une série de parties à contrôler.

2. Procédé selon la revendication 1, **caractérisé en ce qu'**il comporte les étapes de déterminer un intervalle de référence à partir du profil de référence en fonction de tolérances par rapport au profil de référence, et d'établir le bilan des défauts en fonction d'un nombre de points pour lesquels le profil de mesure est en dehors de l'intervalle de référence.

3. Procédé selon la revendication 1, **caractérisé en ce que** les valeurs de mesure sont calculées en faisant une moyenne des niveaux de luminosité relevés selon une direction perpendiculaire à la direction prédéterminée.

4. Procédé selon la revendication 1, **caractérisé en ce que** les valeurs de mesure sont des niveaux de luminosité.

5. Procédé selon la revendication 1, **caractérisé en ce que** les valeurs de mesure sont évaluées sous forme de gradients.

6. Procédé selon la revendication 1, **caractérisé en ce que** la caractéristique prise en compte pour la comparaison est d'une part une différence entre des valeurs de référence, et d'autre part une différence correspondante entre des valeurs de mesure.

7. Procédé selon la revendication 6, **caractérisé en ce que** les différences des valeurs sont prises entre un point le plus élevé et un point le plus bas du profil considéré.

8. Procédé selon la revendication 1, **caractérisé en ce que** la caractéristique prise en compte pour la comparaison est une largeur (L) d'un creux du profil de référence et d'un creux correspondant du profil de mesure.

9. Procédé selon la revendication 1, **caractérisé en ce que** la caractéristique prise en compte pour la comparaison est une aire délimitée par une partie du profil de référence et du profil de mesure.

10. Procédé selon la revendication 1, **caractérisé en ce qu'**une seconde comparaison est effectuée entre le profil de mesure de chaque partie à contrôler et un second profil de référence élaboré à partir d'au moins une partie de composant sans défaut.

## Claims

1. A method of detecting mounting defects of a component on an electronic card, the method comprising the steps of: illuminating the component and viewing at least a portion for inspection (2) of the component by means of a sensor (14) giving a digital bitmap image in the form of a matrix of pixel luminosity levels; establishing a reference profile in a predetermined direction for at least a portion of the component, which profile is obtained by giving reference values to successive pixels along the predetermined direction; establishing for each portion for inspection a measurement profile that is obtained by giving successive pixels along the predetermined direction measurement values that are determined in a manner corresponding to the reference values of the reference profile; comparing the measurement profile with the reference profile as a function of a characteristic associated with the reference profile; and summarizing the defects as a function of said comparison, the method being **characterized in that** the reference values are calculated by taking the mean of the measurement values for a series of portions to be inspected.

2. A method according to claim 1, **characterized in that** it includes the steps of determining a reference interval from the reference profile as a function of tolerances relative to the reference profile, and of establishing the defect summary as a function of a number of pixels for which the measurement profile lies outside the reference interval.

3. A method according to claim 1, **characterized in that** the measurement values are calculated by taking the mean of the luminosity levels measured along a direction perpendicular to the predetermined direction.

4. A method according to claim 1, **characterized in that** the measurement values are luminosity levels.

5. A method according to claim 1, **characterized in that** the measurement values are evaluated in the form of gradients.

6. A method according to claim 1, **characterized in that** the characteristic taken into account for comparison is firstly a difference between reference values, and secondly a corresponding difference between measurement values.

7. A method according to claim 6, **characterized in that** the value differences are taken between a highest pixel and a lowest pixel of the profile under consideration.

8. A method according to claim 1, **characterized in that** the characteristic taken into account for comparison is a width (L) of a trough in the reference profile and a corresponding trough in the measurement profile.

9. A method according to claim 1, **characterized in that** the characteristic taken into account for comparison is an area defined by a portion of the reference profile and by a portion of the measurement profile.

10. A method according to claim 1, **characterized in that** a second comparison is performed between the measurement profile of each portion for inspection and a second reference profile established from at least a portion of a defect-free component.

## Patentansprüche

1. Verfahren zum Erfassen von Montagefehlern eines Bauelements an einer elektronischen Karte, wobei das Verfahren die Schritte umfasst: Beleuchten des Bauelements und Sichtbarmachen mindestens eines zu kontrollierenden Abschnitts (2) des Bauelements mittels eines Sensors (14), der ein digitales Bild aus Punkten in Form einer Matrix von Helligkeitswerten der Punkte liefert, Erstellen eines Bezugsprofils von mindestens einem Abschnitt des Bauelements in einer vorgegebenen Richtung, wobei das Bezugsprofil dadurch erhalten wird, dass aufeinander folgenden Punkten in der vorgegebenen Richtung Bezugswerte zugeordnet werden, Erstellen eines Messprofils für jeden zu kontrollierenden Abschnitt, das dadurch erhalten wird, dass in der vorgegebenen Richtung aufeinander folgenden Punkten Messwerte zugeordnet werden, die auf entsprechende Weise zu den Bezugswerten des Bezugsprofils bestimmt werden, Durchführen eines Vergleichs zwischen dem Messprofil und dem Bezugsprofil in Abhängigkeit einer Charakteristik im Verhältnis zu dem Bezugsprofil und Aufstellen einer Bilanz von Fehlern in Abhängigkeit von diesem Vergleich, **dadurch gekennzeichnet, dass** die Bezugswerte dadurch berechnet werden, dass man einen Mittelwert der Messwerte für eine Reihe von zu kontrollierenden Abschnitten errechnet.

2. Verfahren nach Anspruch 1, **dadurch gekennzeichnet, dass** es die Schritte umfasst: Bestimmen eines Bezugsintervalls ausgehend von dem Bezugsprofil in Abhängigkeit von Toleranzen in Bezug auf das Bezugsprofil und Aufstellen der Bilanz von Fehlern in Abhängigkeit von einer Anzahl von Punkten, bei denen das Messprofil außerhalb des Bezugsintervalls liegt.

3. Verfahren nach Anspruch 1, **dadurch gekennzeichnet, dass** die Messwerte dadurch berechnet werden, dass man den Mittelwert der Helligkeitswerte ermittelt, die in einer zur vorgegebenen Richtung senkrechten Richtung abgelesen werden.

4. Verfahren nach Anspruch 1, **dadurch gekennzeichnet, dass** die Messwerte Helligkeitswerte sind.

5. Verfahren nach Anspruch 1, **dadurch gekennzeichnet, dass** die Messwerte in Form von Gradienten ermittelt werden.

6. Verfahren nach Anspruch 1, **dadurch gekennzeichnet, dass** die für den Vergleich herangezogene Charakteristik einerseits eine Differenz zwischen den Bezugswerten und andererseits eine entsprechende Differenz zwischen den Messwerten ist.

7. Verfahren nach Anspruch 6, **dadurch gekennzeichnet, dass** die Differenzen der Werte zwischen einem höchsten Punkt und einem niedrigsten Punkt des betrachteten Profils genommen werden.

8. Verfahren nach Anspruch 1, **dadurch gekennzeichnet, dass** die für den Vergleich herangezogene Charakteristik eine Breite (L) einer Vertiefung des Bezugsprofils und einer entsprechenden Vertiefung des Messprofils ist.

9. Verfahren nach Anspruch 1, **dadurch gekennzeichnet, dass** die für den Vergleich herangezogene Charakteristik ein Bereich ist, der von einem Abschnitt des Bezugsprofils und des Messprofils begrenzt wird.

10. Verfahren nach Anspruch 1, **dadurch gekennzeichnet, dass** ein zweiter Vergleich zwischen dem Messprofil jedes zu kontrollierenden Abschnitts und einem zweiten Bezugsprofil durchgeführt wird, das ausgehend von mindestens einem fehlerfreien Abschnitt des Bauelements berechnet wurde.
